# FASCICULE DE BREVET EUROPEEN

(11) **EP 0 235 479 B1**
(45) Date de publication et mention de la délivrance du brevet: **04.08.1993**
(21) Numéro de dépôt: 86402879.0
(22) Date de dépôt: 18.12.1986
(51) Int. Cl.: H02H 3/04, H02H 3/08

(54) **Déclencheur statique à circuit de test pour disjoncteur électrique**
Statischer Auslöser mit Testschaltung für elektrischen Leistungsschalter
Static tripping unit with test circuit for electrical circuit interruptor

(30) Priorité: 10.01.1986 FR 8600415; 10.01.1986 FR 8600416
(43) Date de publication de la demande: 09.09.1987
(73) Titulaire: MERLIN GERIN, F-38050 Grenoble Cédex (FR)
(72) Inventeur: Fraisse, Didier, F-38050 Grenoble Cédex (FR); Tripodi, Paul, F-38050 Grenoble Cédex (FR); Dudon, Pascal, F-38050 Grenoble Cédex (FR)
(74) Mandataire: Hecké, Gérard

(56) Documents cités:
- WO-A-79/00769
- US-A- 3 924 160
- US-A- 4 060 844

## Description

L'invention est relative à un déclencheur statique pour un disjoncteur électrique multipolaire à mécanisme de commande d'un système de contacts séparables, comprenant :
- un dispositif de mesure présentant une borne de sortie positive et une borne de sortie négative, équipé d'un capteur de courant par pôle comprenant un transformateur de courant pour détecter l'intensité du courant circulant dans chaque conducteur actif du réseau à courant alternatif, chacun des conducteurs actifs constituant l'enroulement primaire d'un transformateur de courant,
- des premiers moyens de redressement formés par des ponts de redressement à diodes constituant un ensemble de cellules de redressement et connectés électriquement avec ledit capteur pour délivrer un premier signal redressé de commande, proportionnel à l'intensité maximale des courants du réseau,
- un conducteur commun relié à une borne de chacun des enroulements secondaires des transformateurs de courant,
- un premier circuit électronique de traitement dudit premier signal de commande, comportant au moins un circuit de déclenchement temporisé ou instantané susceptible d'envoyer avec ou sans retard un ordre de déclenchement à un organe de commutation statique lorsque ledit signal dépasse un seuil prédéterminé,
- un électro-aimant à bobine de déclenchement piloté par ledit organe de commutation et agissant sur le mécanisme de commande après l'émission de l'ordre de déclenchement, pour ouvrir le système de contacts séparables,
- un circuit de test comportant une première borne auxiliaire et une seconde borne auxiliaire pouvant être raccordées chacune à un simulateur de défaut destiné à injecter un courant de défaut artificiel pour contrôler le fonctionnement du déclencheur statique lorsque le disjoncteur est connecté ou déconnecté avec les conducteurs actifs,
- et un circuit de connexion interne assurant la liaison des bornes auxiliaires avec le dispositif de mesure,
L'utilisation d'un circuit test dans un déclencheur électronique est bien connue, et permet de tester le fonctionnement du déclencheur en injectant un courant de défaut artificiel qui simule un courant de surcharge ou de court-circuit. L intensité de ce courant est généralement supérieure au seuil de déclenchement du circuit de déclenchement à long retard ou à court retard. Une première possibilité de test s'effectue lorsque le disjoncteur est déconnecté du réseau, et le branchement du simulateur de défaut aux bornes de test permet d'alimenter le déclencheur électronique et d'injecter le courant artificiel de défaut. L'ouverture des contacts du disjoncteur, suite à un test, renseigne l'opérateur que le déclencheur électronique est en bon état de fonctionnement.

Une deuxième possibilité de test est possible lorsque le disjoncteur se trouve en service en étant connecté au réseau à surveiller. Le brevet USA 3 924 160 divulgue un circuit test pour un disjoncteur triphasé permettant d'injecter un courant test continu en parallèle sur une diode dont l'anode est connectée à la borne de sortie positive d'un pont redresseur associé à l'un des transformateurs de courant. Les trois ponts redresseurs sont reliés en série et le circuit électronique de traitement est sensible au courant le plus fort :
- si l'intensité du courant phase délivré par les transformateurs de courant est supérieure au courant test, la diode du circuit test est polarisée en direct, et le circuit de traitement reçoit uniquement le courant phase ;
- si le courant test est supérieur au courant phase, la diode du circuit test est bloquée et le circuit de traitement répond exclusivement au courant test.

Un tel circuit de test permet d'adapter le circuit de traitement au courant le plus fort, le test étant alors indépendant des intensités des courants de phase. Le fonctionnement du déclencheur n'est pas entravé par le court-circuitage des bornes de test. Le problème posé par ce dispositif est la polarisation des bornes test. Il est en effet indispensable de connecter l'anode de la diode au pôle négatif du simulateur, et la cathode au pôle positif du simulateur. Une erreur de branchement du simulateur provoque une inversion de la polarité, entraînant la destruction de la diode et du circuit électronique de traitement.

Le brevet USA 4 060 844 se rapporte à un déclencheur statique pour disjoncteur triphasé comprenant un circuit de mesure à transformateurs de courant coopérant avec deux ponts redresseurs en parallèle. Un circuit de test à diode est branché en parallèle du côté continu des ponts redresseurs, l'anode de la diode de test étant connectée au pôle positif du simulateur, et la cathode à la borne de sortie positive des ponts redresseurs. La borne de sortie négative des ponts est reliée au pôle négatif du simulateur. Un tel déclencheur est insensible à un éventuel court-circuitage des bornes test, mais le test à courant continu reste polarisé, et est incomplet étant donné que la vérification de l'état du dispositif de détection, notamment le conducteur commun des enroulements secondaires des transformateurs de courant n'est pas effectuée.

L'objet de l'invention consiste à améliorer la fiabilité et la sécurité des circuits de test incorporés dans les déclencheurs statiques, indépendamment de la configuration du réseau.

Selon un premier mode de réalisation, le déclencheur selon l'invention est caractérisé en ce que :
- le circuit de connexion interne est branché à l'entrée d'une cellule de redressement appartenant à des seconds moyens de redressement et constituée par deux groupes de diodes formant un pont redresseur à diodes, dont la sortie est branchée électriquement en parallèle avec les sorties respectives des ponts de redressement à diodes constituant les cellules de redressement desdits premiers moyens de redressement,
- les diodes des cellules de redressement appartenant au premier et au second moyens de redressement sont réparties en une pluralité de groupes identiques connectés électriquement en parallèle entre la borne de sortie positive et la borne de sortie négative, chaque groupe comportant une paire de diodes en série formant un demi-pont, l'un des groupes des seconds moyens de redressement servant de retour à l'ensemble des autres groupes,
- la première borne auxiliaire est connectée au conducteur commun, lui-même connecté au point milieu du groupe de retour,
- la seconde borne auxiliaire est reliée au point milieu de l'autre groupe des seconds moyens de redressement, tandis que les points milieux des groupes des premiers moyens de redressement sont connectés respectivement aux bornes des enroulements secondaires opposées à celles reliées au conducteur commun.

Les diodes des cellules de redressement en pont sont réparties en une pluralité de groupes identiques connectés électriquement en parallèle entre la borne de sortie positive et la borne de sortie négative du dispositif de mesure, chaque groupe comportant une paire de diodes en série, dont le point milieu est relié respectivement à l'une des extrémités de l'enroulement secondaire des transformateurs de courant, à la première borne auxiliaire du circuit test, et à la deuxième borne auxiliaire du circuit test.

On remarque que le circuit test associé au simulateur se comporte comme un générateur de courant connecté du côté alternatif d'une cellule de redressement. Un tel montage présente les avantages suivants :
- en plus du circuit électronique de traitement du déclencheur, le circuit test vérifie l'état des diodes de la cellule de redressement associée aux bornes test,
- le déclencheur est insensible à un court-circuitage accidentel ou volontaire des bornes de test lorsque le disjoncteur est en service,
- le test est indépendant de la nature du courant test : courant continu ou courant alternatif de fréquence quelconque,
- le test n'est pas polarisé dans le cas d'un courant test à courant continu et autorise une inversion de la polarité sur les bornes test,
- le test est indépendent de la configuration du réseau (équilibré ou déséquilibré) lorsque le disjoncteur est en service. Dans ce cas, le courant test se superpose toujours au courant redressé en provenance des transformateurs de courants.

La première borne du circuit test est reliée avantageusement à un conducteur commun d'interconnexion des enroulements secondaires des transformateurs de courant.

La borne de sortie positive du dispositif de mesure est connectée d'une part à une premiére résistance de mesure ayant une valeur fixe ou ajustable en fonction du calibre, et d'autre part à la cathode de deux diodes dont l'anode est reliée respectivement par le circuit de connexion à la première borne et à la deuxième borne du circuit test, ce dernier étant connecté électriquement du côté alternatif d'une cellule de redressement.

Selon un deuxième mode de réalisation, appliqué à un disjoncteur différentiel, le déclencheur comporte de plus un discriminateur de courant différentiel résiduel connecté électriquement entre une première borne du circuit test et l'entrée d'un pont redresseur à diodes du dispositif de mesure, l'autre entrée dudit pont étant raccordée à une deuxième borne du circuit test. Des moyens à conduction unidirectionnelle coopèrent avec ledit discriminateur DDR tel que l'inversion du sens de circulation du courant test dans le circuit test permet de vérifier séparément le fonctionnement des premier et deuxième circuits électroniques de traitement des premier et deuxième signaux relatifs à la protection contre les surintensités, et la protection différentielle du déclencheur.

Le test est effectué en position connectée ou déconnectée du disjoncteur au moyen d'un simulateur ayant une source de courant continu ou redressé. L'inversion du sens de circulation du courant test intervient par un simple changement de polarité des première et deuxième bornes du circuit test. Le test de la protection différentielle est rendu possible pour un sens donné du courant test circulant dans une résistance homopolaire du discriminateur. Le test de la protection contre les surintensités intervient pour le sens opposé du courant test, et avec les mêmes prises test.

D'autres avantages et caractéristiques ressortiront plus clairement de l'exposé qui va suivre d'un mode de réalisation de l'invention donné à titre d'exemple non limitatif et représenté aux dessins annexés dans lesquels :
- la figure 1 montre un schéma du déclencheur électronique d'un disjoncteur triphasé et neutre, équipé du circuit test selon l'invention;
- la figure 2 illustre le schéma équivalent du dispositif de mesure de la figure 1;
- la figure 3 est une variante de la figure 2, pour un déclencheur d'un disjoncteur triphasé sans neutre;
- la figure 4 représente le diagramme temporel des courants du dispositif de mesure pour un réseau triphasé équilibré sans neutre et sans test;
- la figure 5 représente le diagramme temporel des courants du dispositif de mesure pour un réseau triphasé déséquilibré avec neutre, et sans test;
- la figure 6 correspond au diagramme temporel de la figure 4 avec un test à courant continu;
- la figure 7 correspond au diagramme temporel de la figure 5 avec un test à courant alternatif;
- la figure 8 montre un schéma du déclencheur électronique pour un disjoncteur différentiel triphasé et neutre, équipé du circuit test selon l'invention;
- la figure 9 représente le dispositif de mesure de la figure 8, lors d'un test de la protection contre les surintensités;
- la figure 10 est une vue identique de la figure 9, lors d'un test de la protection différentielle.

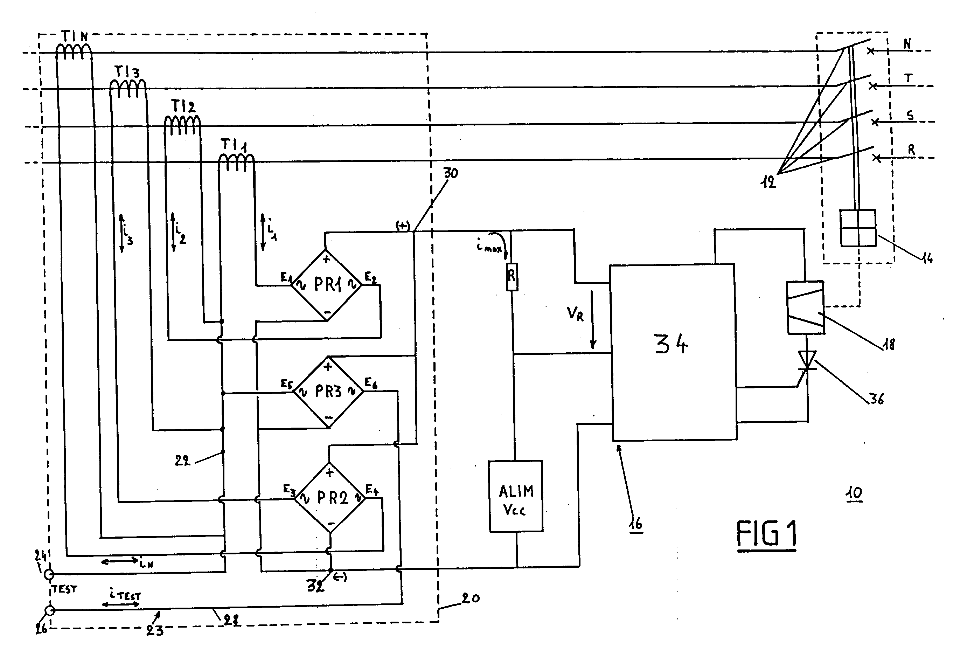

En référence à la figure 1, un disjoncteur 10 électrique multipolaire, notamment tétrapolaire, comporte un système de contacts 12 séparables connectés respectivement dans des conducteurs actifs R, S, T, N, d'un réseau alternatif triphasé et neutre. Les contacts mobiles du système de contacts 12 sont actionnés par un mécanisme 14 de commande piloté par un déclencheur électronique 16 ayant un électro-aimant à bobine 18 de déclenchement. L'excitation de la bobine 18 de déclenchement intervient lors d'une surcharge ou d'une court-circuit et provoque le déverrouillage du mécanisme 14 entraînant la séparation simultanée du système de contacts 12 pour l'ouverture du disjoncteur 10.

Le déclencheur électronique 16 comporte un dispositif de mesure ou de détection 20 à transformateurs de courant TI 1, TI 2, TI 3, et TIN, destinés à surveiller l'intensité du courant circulant dans chaque conducteur actif R, S, T, N. L'enroulement primaire de chaque transformateur de courant TI 1, TI 2, TI 3, TIN est formé par le conducteur actif R, S, T, N correspondant, lequel peut traverser directement le circuit magnétique dans le cas de barres à sections importantes (gros calibres), ou être enroulés sur le circuit magnétique pour constituer une ou plusieurs spires de fils ou bandes (petits calibres). L'une des extrémités de chaque enroulement secondaire des transformateurs d'intensité TI 1, TI 2, TI 3, TIN est connectée électriquement à un conducteur commun 22. Les autres extrémités des deux transformateurs de courant TI 1, et TI 2 associés aux conducteurs de phase R et S sont reliées aux deux entrées alternatives E1 et E2 d'une première cellule de redressement PR 1 à quatre diodes disposées en pont. Les autres transformateurs de courant TI 3 et TIN associés aux conducteurs de phase T et de neutre N sont branchés d'une manière analogue aux deux entrées alternatives E3 et E4 d'une deuxième cellule de redressement PR 2 ayant un pont à quatre diodes. Le dispositif de détection 20 comprend en plus un circuit test 23 comprenant une paire de bornes 24, 26, de test susceptibles de coopérer avec un simulateur de défaut extérieur (non représenté) destiné à injecter un courant de défaut artificiel pour le contrôle du fonctionnement du déclencheur électronique 16. Les deux bornes 24, 26, de test sont connectées respectivement par un circuit interne 28 de liaison à deux entrées alternatives E5 et E6 d'une troisième cellule de redressement PR 3, la borne 24 et l'entrée E5 étant interconnectées par le conducteur commun 22. Les sorties élémentaires des ponts des trois cellules de redressement PR 1, PR 2, PR 3, sont branchées électriquement en parallèle, telles que le dispositif de détection 20 comporte une sortie commune positive 30 et une sortie négative 32, entre lesquelles sont connectés en série une résistance de mesure R et un circuit d'alimentation ALIM à tension de référence Vcc.

Le signal courant i max délivré par la sortie positive 30 du dispositif de détection 20 circule dans le résistance de mesure R ayant une valeur fixe ou ajustable en fonction du calibre. La tension de commande VR aux bornes de la résistance R de mesure est porportionnelle au signal courant i max, et est appliquée à un circuit électronique de traitement 34 destiné à envoyer un ordre de déclenchement à un commutateur statique ou interrupteur contrôlé, notamment un thyristor 36 disposé en série avec la bobine 18 de l'électro-aimant.

Le circuit électronique de traitement 34 comporte un premier circuit de déclenchement temporisé à long retard et à court retard, et un deuxième circuit de déclenchement instantané, susceptibles de délivrer avec ou sans retard ledit ordre de déclenchement après dépassement d'un seuil prédéterminé. Un tel circuit de déclenchement analogique est décrit en détail dans le brevet français N^{o} 2 530 089 de la demanderesse, mais il est évident que l'invention est applicable à tout autre type de circuit de traitement, notamment un déclencheur numérique.

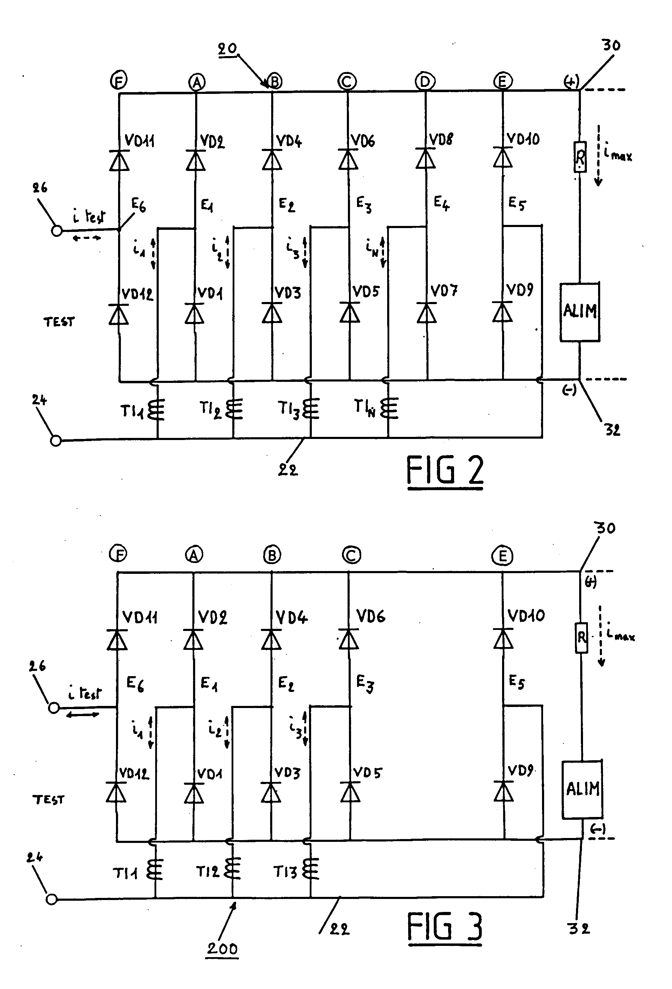

La figure 2 illustre le schéma électrique équivalent du dispositif de détection 20, associé au disjoncteur tétrapolaire 10 de la figure 1, les trois cellules de redressement PR1, PR2, PR3 en pont comprenant douze diodes VD1 à VD12 réparties en six groupes A à F connectés en parallèle aux bornes de sortie positive 30 et négative 32. Chaque groupe A à F comporte deux diodes en série VD1, VD2 ; VD 3, VD 4; VD 5, VD 6; VD 7, VD 8 ; VD 9, VD 10 ; VD 11, VD 12, dont le point milieu E1 à E6 respectif est relié aux transformateurs de courant TI 1, TI 2, TI 3, TIN, à la borne test 24 par l'intermédiaire du conducteur commun 22 et à l'autre borne test 26.

Le dispositif de détection 200 selon la figure 3 est une variante de la figure 2 pour un disjoncteur triphasé sans neutre. Il suffit dans ce cas de supprimer les deux diodes VD7, VD8 du groupe D et le transformateur de courant TIN, le reste du schéma étant identique à celui de la figure 2.

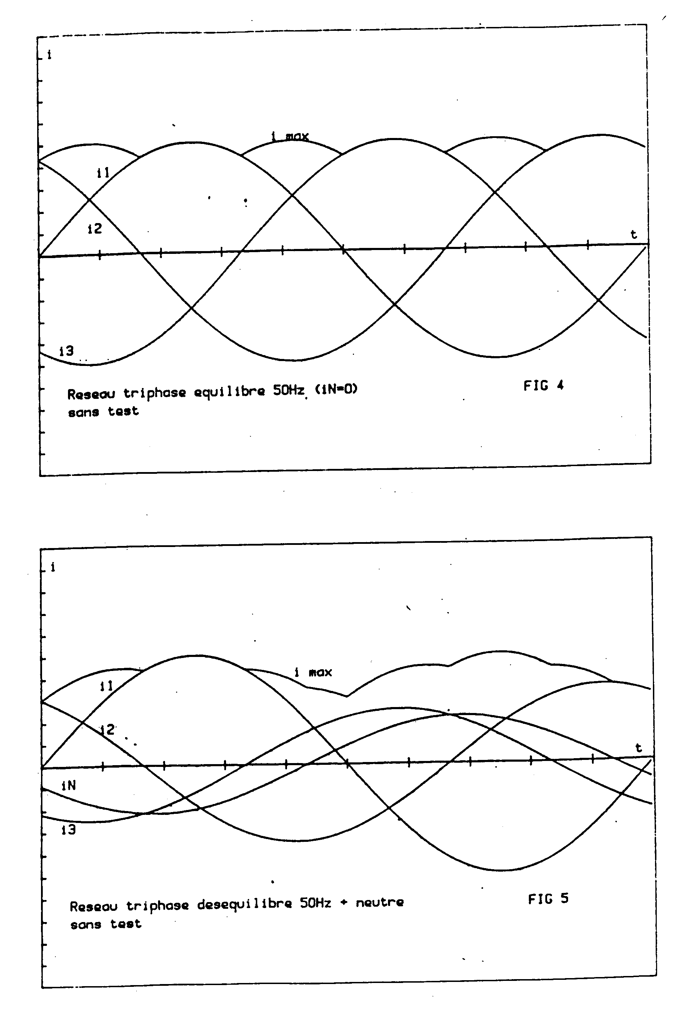

Lors du branchement du disjoncteur 10 et en position de fermeture des contacts 12, le fonctionnement du dispositif de détection 20, 200 équipé du circuit test 23 selon l'invention est illustré sur les diagrammes des figures 4 à 7 :
- la figure 4 montre le diagramme temporel des courants alternatifs déphasés i1, i2, i3 délivrés respectivement par les transformateurs de courant TI 1, TI 2, TI 3 du dispositif de détection 200 de la figure 3. Le réseau triphasé est équilibré, et aucun courant test n'est injecté dans les bornes test 24, 26. Le courant redressé i max circulant dans la résistance de mesure R présente une faible ondulation et représente le maximum des courants de phase, correspondant à la somme des alternances positives des courants élémentaires i1, i2, i3. Les diodes VD11 et VD12 restent toujours bloquées,

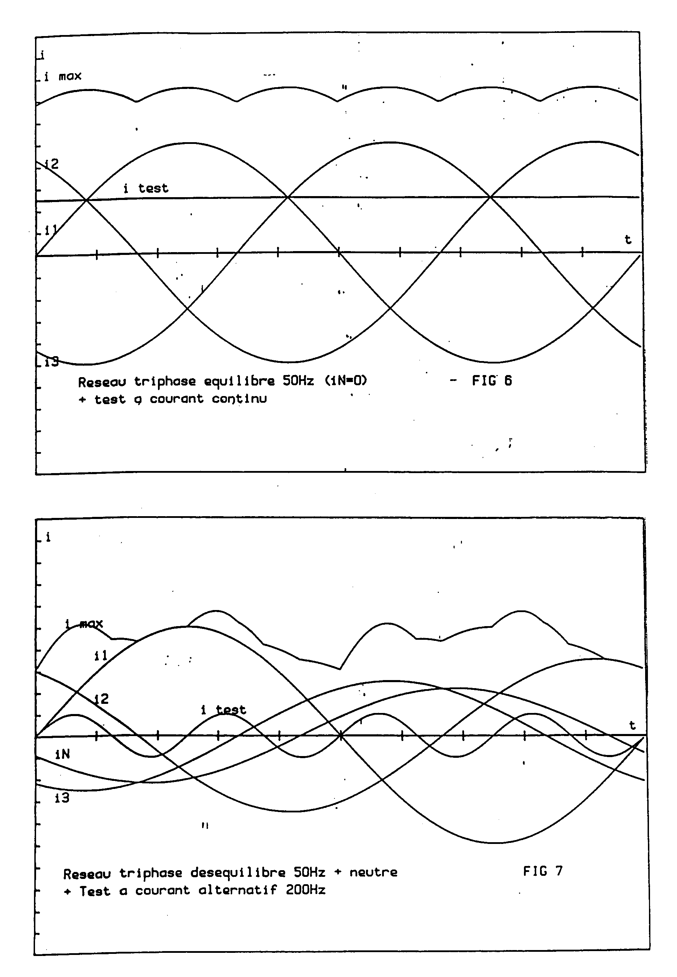

- la figure 5 représente le diagramme temporel sans test des différents courants alternatifs dans le dispositif de détection 20 de la figure 2, appliqué à un réseau triphasé déséquilibré avec neutre. Dans ce cas, les diodes VD11 et VD12 sont toujours non conductrices, et l'intensité du courant i max dans la résistance de mesure R correspond à un instant donné à la somme des intensités des alternances positives des courants élémentaires i1, i2, i3 et iN,
- la figure 6 correspond au diagramme temporel de la figure 4 (réseau triphasé équilibré à fréquence 50 Hz) avec un test à courant continu. Lorsque le sens du courant test (i test) continu est orienté de la borne 26 vers l'entrée E6 (figure 3), les diodes VD11 et VD9 sont conductrices, alors que les diodes VD12 et VD10 sont bloquées. Le courant test (i test) s'ajoute aux courants de phase circulant dans la résistance de mesure R, et la courbe du courant i max est décalée vers le haut par rapport à celle de la figure 4. Lorsque le sens du courant test (i test) continu est orienté de la borne 24 vers l'entrée E5 (figure 3) les diodes VD10 det VD12 sont conductrices, et les diodes VD9 et VD11 sont bloquées. Le courant test s'ajoute toujours aux courants de phase circulant dans la résistance R,
- la figure 7 montre le diagramme temporel de la figure 5 (réseau triphasé déséquilibré 50 Hz avec neutre) lors d'un test à courant alternatif 200 Hz appliqué aux bornes test 24, 26, de la figure 2. Le courant i max circulant dans le résistance de mesure R représente la somme des alternances positives des courants élémentaires i1, i2, i3, iN, et du courant test alternatif (i test).

L'opération de test peut être effectuée à tout moment lorsque le disjoncteur 10 est connecté au réseau alternatif, et le courant test (i test) se superpose aux courants redressés en provenance des transformateurs de courant TI1 à TIN. L'injection du courant test au moyen du simulateur extrérieur est assimilée à une entrée de commande d'un transformateur de courant, et intervient du côté alternatif de la troisième cellule de redressement PR3 constituée par le pont de diodes VD9, VD10, VD11 et VD12. En plus du contrôle du circuit de traitement 34, le test vérifie également l'état du dispositif de détection 20, 200, du côté alternatif.

Le test peut bien entendu être opéré lorsque le disjoncteur 10 est déconnecté du réseau. Dans ce cas, seul le courant test (i test) continu ou redressé circule dans la résistance de mesure R, étant donné que les courants alternatifs élémentaires i1, i2, i3, in, des transformateurs de courant TI1 à TIN sont nuls.

Le redressement avec test du dispositif de détection (20, 200) est indépendant de la nature du courant test. Le simulateur de défaut peut en effet injecter indifféremment un courant continu ou un courant alternatif de fréquence quelconque pour tester le bon fonctionnement du déclencheur électronique 16. La polarité de la source à courant continu n'intervient pas lors d'un test à courant continu, et une inversion de polarité sur les bornes test 24, 26, est parfaitement admise lors du raccordement du simulateur.

Le déclencheur électronique 16 est insensible à un court-circuitage accidentel des bornes test 24, 26, lorsque le disjoncteur 10 est connecté au réseau.

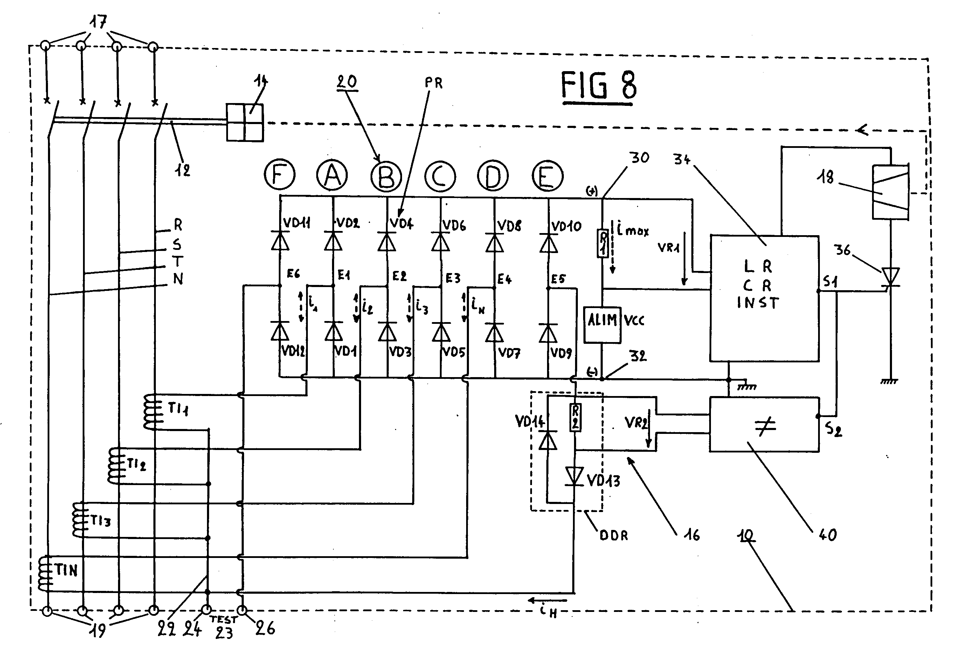

Selon une variante des fig. 8 - 10, appliquée à un disjoncteur différentiel tétrapolaire, les mêmes repères seront utilisés pour désigner des éléments identiques à ceux du dispositif des fig. 1 à 3. Les douze diodes (VD1 à VD12) du dispositif de redressement PR sont réparties en six groupes (A, B, C, D, E, F) identiques connectés électriquement en parallèle entre la borne de sortie positive 30 et la borne de sortie négative 32 du dispositif de mesure 20. La résistance R des fig. 1 à 3, devient la première résistance de mesure R1, à laquelle est prélevé le premier signal de commande, appliqué au premier circuit électronique de traitement qui détecte les surcharges et les court-circuits sur le réseau.

Le déclencheur comporte de plus un discriminateur DDR de courant différentiel résiduel , pourvu d'une deuxième résistance de mesure R2 connectée par l'une de ses extrémités au point milieu E5 du groupe E des diodes VD9 et VD10, et par son extrémité opposée à l'anode d'une diode auxiliaire VD 13 dont la cathode se trouve en liaison avec le conducteur commun 22 et la prise test 24. Une autre diode VD14 est branchée en inverse sur le circuit série constitué par la résistance R2 et la diode VD13. Les bornes de cette deuxième résistance de mesure R2 sont reliées à un deuxième circuit électronique de traitement 40 dont la sortie S2 pilote la gâchette d'amorçage du thyristor 36.

On remarque que le thyristor 36 est commun aux deux circuits électroniques de traitement 34, 40, et provoque l'excitation de la bobine 18 de déclenchement lorsque l'une des tensions de commande VR1, VR2 dépasse un seuil prédéterminé. La tension VR1 détermine la protection contre les surintensités, tandis que la tension VR2 détermine la protection différentielle suite à un défaut d'isolement.

En l'absence de surintensités sur le réseau, la valeur de la tension VR1 est insuffisante pour actionner l'un des circuits de déchenchement LR, CR et INST. du circuit de traitement 34. La sortie S1 reste inactive, et le thyristor 36 se trouve dans l'état de blocage.

La somme vectorielle des courants élémentaires i1, i2, i3, iN délivrés par les transformateurs de courants Ti1 à TIN est l'image du courant différentiel résiduel. En l'absence de défaut d'isolement sur le réseau, ce courant est nul, ainsi que la tension VR2 aux bornes de la deuxième résistance R2. La présence d'un défaut d'isolement entre un conducteur actif R, S, T, N, du réseau et une masse ou la terre, provoque la circulation d'un courant résiduel ou homopolaire iH dans la deuxième résistance R2 et dans la diode VD13. La tension VR2 atteint le seuil de déclenchement différentiel du deuxième circuit de traitement 40 lorsque l'intensité du courant résiduel iH atteint une sensibilité prédéterminée (de 20mA à 500 mA). Le déclenchement différentiel peut être instanté ou temporisé après l'émission par la sortie S2 de l'ordre d'amorçage du thyristor 36.

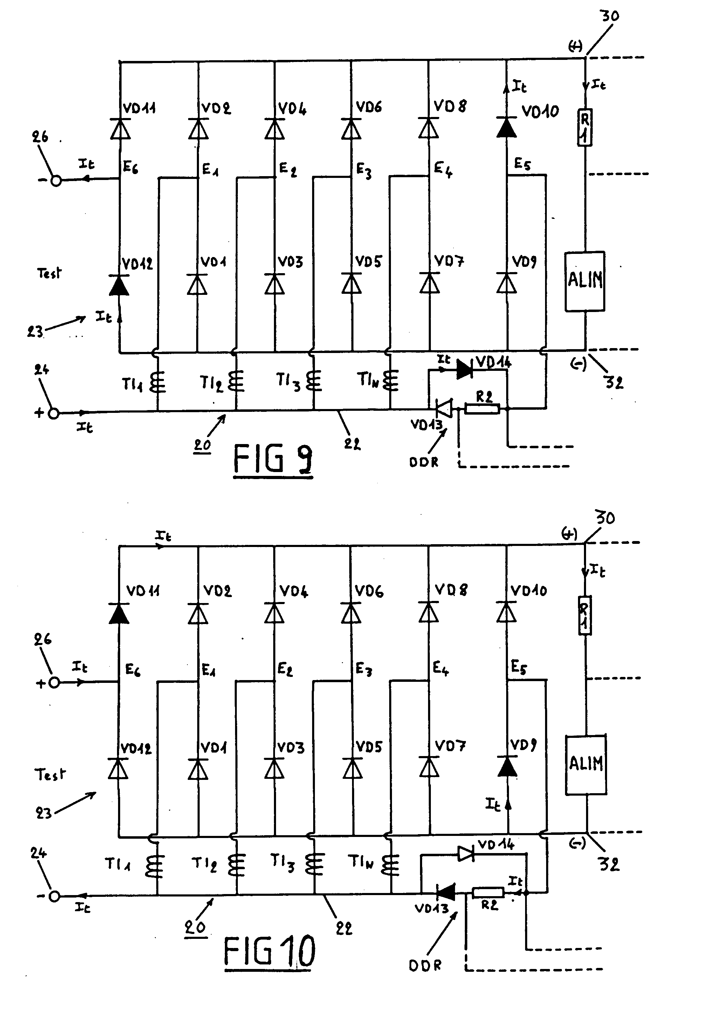

La vérification par le circuit test 23 des différentes fonctions de déclenchement à long retard LR, à court retard CR, instantané INST pour la protection contre les surintensités et différentiel pour la protection contre les défauts d'isolement peut s'effecteur indifféremment lors de la connexion ou de la déconnexion des bornes 17, 19, d'arrivée et de départ du disjoncteur 10. Sur les figures 9 et 10, l'opération de test intervient lorsque le disjoncteur 10 est déconnecté du réseau, et après branchement du simulateur aux bornes test 24, 26. Le simulateur est formé par un boîtier autonome renfermant à titre d'exemple une source de courant continu, un bouton poussoir de commande, un dispositif de signalisation à diodes électroluminescentes, et une sortie à deux fils de polarités différentes coopérant avec les bornes test 24, 26, du déclencheur électronique 16.

La figure 9 représente le test du circuit 34 pour la protection contre les surintensités. La polarité négative du simulateur est appliquée à la borne test 26, et la polarité positive à la borne test 24. Le sens du courant test It à courant continu est indiqué sur le schéma, et circule à partir de la borne 24 dans le circuit formé par le conducteur commun 22, les diodes VD 14 et VD 10, la première résistance de mesure R1, la diode VD12, pour ressortir par la borne test 26. Le passage du courant test It dans la première résistance R1 permet de vérifier le bon fonctionnement du circuit électronique de traitement 34, notamment les différents déclenchements à LR, CR et INST. l'intensité du courant test est supérieure au courant image i max correspondant au courant nominal du disjoncteur. Le blockage de la diode VD13 empêche toute circulation de courant dans la deuxième résistance R2 de mesure entraînant la neutralisation du discriminateur DDR qui est hors courant.

Sur la figure 10, la modification de la polarité des bornes test 24, 26, provoque une inversion du sens d'injection du courant test It pour vérifier le fonctionnement du circuit 40 relatif à la protection homopolaire. La borne test 26 est connectée au pôle positif du simulateur, et la borne test 24 au pôle négatif. Le courant test It entre par la borne 26, et circule dans la diode VD11, la première résistance R1, la diode VD9, la deuxième résistance R2, la diode VD13, pour ressortir par la borne test 24. La diode VD14 est bloquée et la circulation du courant test It dans la deuxième résistance de mesure R2 engendre la tension VR2 permettant de tester le seuil et la temporisation de la protection différentielle du circuit 40. L'intensité du courant test It est comprise entre la sensibilité du circuit de déclenchement différentiel et le courant image i max correspondant à l'intensité nominale du disjoncteur. Il en résulte que le passage du courant test dans la première résistance R1 de mesure n'a aucun effet sur le circuit 34, car la tension VR1 reste inférieure au seuil de déclenchement du circuit de déclenchement à LR.

On remarque que l'inversion du sens de circulation du courant test par le simple changement de polarité du simulateur permet de tester séparément la protection contre les surintensités et la protection différentielle du déclencheur 16 avec la même paire de bornes de test 24, 26.

Selon une variante, le simulateur comporte une source de courant redressé non autonome.

Le test décrit en référence aux figures 9 et 10 peut être réalisé lorsque le disjoncteur 10 est connecté au réseau. Le circuit test 23 selon l'invention s'applique d'autre part à un déclencheur pour un disjoncteur triphasé sans neutre. Il suffit alors de supprimer le transformateur de courant TIN et les redresseurs VD7 et VD8 du dispositif de mesure 20.

Le deux diodes VD13 et VD14 associées à la deuxième résistance de mesure R2 du discriminateur DDR peuvent bien entendu être remplacées par d'autres moyens à conduction unidirectionnelle susceptibles de bloquer la circulation du courant test dans la deuxième résistance R2 lors d'un test du circuit 34 relatif à la protection contre les surintensités.

## Revendications

1. Déclencheur statique (16) pour un disjoncteur (10) électrique multipolaire à mécanisme (14) de commande d'un système de contacts séparables (12), comprenant :
- un dispositif de mesure (20) présentant une borne de sortie positive (30) et une borne de sortie négative (32), équipé d'un capteur de courant par pôle comprenant un transformateur de courant (TI1, TI2, TI3, TIN) pour détecter l'intensité du courant circulant dans chaque conducteur actif (R, S, T, N) du réseau à courant alternatif, chacun des conducteurs actifs (R, S, T, N) constituant l'enroulement primaire d'un transformateur de courant (TI1, TI2, TI3, TIN),
- des premiers moyens de redressement formés par des ponts de redressement à diodes (VD1 à VD4, VD5 à VD8) constituant un ensemble de cellules de redressement (PR1, PR2) et connectés électriquement avec ledit capteur pour délivrer un premier signal redressé de commande, proportionnel à l'intensité maximale des courants (i1, i2, i3, iN) du réseau,
- un conducteur commun (22) relié à une borne de chacun des enroulements secondaires des transformateurs de courant (TI1, TI2, TI3, TIN),
- un premier circuit électronique (34) de traitement dudit premier signal de commande, comportant au moins un circuit de déclenchement temporisé ou instantané susceptible d'envoyer avec ou sans retard un ordre de déclenchement à un organe de commutation statique (36) lorsque ledit signal dépasse un seuil prédéterminé,
- un électro-aimant à bobine (18) de déclenchement piloté par ledit organe de commutation (36) et agissant sur le mécanisme de commande (14) après l'émission de l'ordre de déclenchement, pour ouvrir le système de contacts séparables (12),
- un circuit de test (23) comportant une première borne auxiliaire (24) et une seconde borne auxiliaire (26) pouvant être raccordées chacune à un simulateur de défaut destiné à injecter un courant de défaut artificiel pour contrôler le fonctionnement du déclencheur statique (16) lorsque le disjoncteur (10) est connecté ou déconnecté avec les conducteurs actifs (R, S, T, N),
- et un circuit de connexion interne (28) assurant la liaison des bornes (24, 26) auxiliaires avec le dispositif de mesure (20),
caractérisé en ce que :
- le circuit de connexion interne (28) est branché à l'entrée (E5, E6) d'une cellule de redressement (PR3) appartenant à des seconds moyens de redressement et constituée par deux groupes de diodes (E, F) formant un pont redresseur à diodes (VD9 à VD12), dont la sortie est branchée électriquement en parallèle avec les sorties respectives des ponts de redressement à diodes (VD1 à VD4, VD5 à VD8) constituant les cellules de redressement desdits premiers moyens de redressement,
- les diodes (VD1 à VD12) des cellules de redressement (PR1, PR2, PR3) appartenant au premier et au second moyens de redressement sont réparties en une pluralité de groupes (A à F) identiques connectés électriquement en parallèle entre la borne de sortie positive (30) et la borne de sortie négative (32), chaque groupe (A à F) comportant une paire de diodes en série formant un demipont (VD1,VD2; VD3,VD4; VD5,VD6; VD7,VD8; VD9,VD10; VD11, VD12), l'un des groupes (E) des seconds moyens de redressement servant de retour à l'ensemble des autres groupes (A,B,C,D,F),
- la première borne auxiliaire (24) est connectée au conducteur commun (22), lui-même connecté au point milieu (E5) du groupe (E) de retour,
- la seconde borne auxiliaire (26) est reliée au point milieu (E6) de l'autre groupe (F) des seconds moyens de redressement, tandis que les points milieux (E1, E2, E3, E4) des groupes (A,B,C,D) des premiers moyens de redressement sont connectés respectivement aux bornes des enroulements secondaires opposées à celles reliées au conducteur commun (22).

2. Déclencheur statique selon la revendication 1 pour un disjoncteur tétrapolaire de protection d'un réseau triphasé avec neutre, caractérisé en ce que les cellules de redressement (PR1, PR2, PR3) associées au circuit test (23) et aux transformateurs de courant (TI1, TI2, TI3, TIN) comportent douze diodes réparties en six groupes (A, B, C, D, E, F) de deux diodes série.

3. Déclencheur statique selon la revendication 1, pour un disjoncteur tripolaire de protection d'un réseau triphasé sans neutre, caractérisé en ce que les cellules de redressement (PR1 à PR3) associées au circuit test (23) et aux transformateurs de courant (TI1 à TI3) comportent dix diodes réparties en cinq groupes (A, B, C, E, F) de deux diodes série.

4. Déclencheur statique selon l'une des revendications 1 à 3, caractérisé en ce que la borne de sortie positive (30) du dispositif de mesure (20) est connectée d'une part à une première résistance de mesure (R, R1) ayant une valeur fixe ou ajustable en fonction du calibre, et d'autre part à la cathode de deux diodes (VD10, VD11) dont l'anode est reliée respectivement par le circuit de connexion (28) à la première borne (24) et à la deuxième borne (26) du circuit test (23).

5. Déclencheur statique selon l'une des revendications 1 à 4, appliqué à un disjoncteur (10) multipolaire différentiel, ayant de plus un deuxième circuit électronique (40) de traitement d'un deuxième signal homopolaire élaboré par le dispositif de mesure (20) en présence d'un défaut d'isolement provoquant le déclenchement lorsque le courant différentiel résiduel dépasse un seuil prédéterminé, caractérisé en ce qu'un discriminateur DDR de courant différentiel résiduel est connecté électriquement entre la première borne (24) du circuit test (23) et l'entrée (E5) d'un pont redresseur à diodes (VD9, VD10, VD12, VD11) du dispositif de mesure (20), l'autre entrée (E6) dudit pont étant raccordée à la deuxième borne (26) du circuit test (23), et que des moyens à conduction unidirectionnelle coopèrent avec ledit discriminateur DDR tel que l'inversion du sens de circulation du courant test (It) dans le circuit test (23) permet de vérifier séparément le fonctionnement desdits premier et deuxième circuits électroniques (34, 40) de traitement des premier et deuxième signaux relatifs à la protection contre les surintensités, et la protection différentielle du déclencheur (16), le test étant effectué au moyen d'un simulateur ayant une source de courant continu ou redressé dans laquelle l'inversion du sens de circulation du courant test (It) intervient par un simple changement de polarité des première et deuxième bornes (24, 26) du circuit test (23).

6. Déclencheur statique selon la revendication 5, caractérisé en ce que le discriminateur DDR de courant différentiel résiduel comporte une deuxième résistance de mesure R2 ayant une extrémité connectée à ladite entrée E5 du pont redresseur à diodes (VD9 à VD12), et une extrémité opposée reliée électriquement à la première borne test (24) au moyen d'une première diode auxiliaire (VD13), et qu'une deuxième diode auxiliaire (VD14) est branchée en inverse sur le circuit série formé par la deuxième résistance de mesure (R2) et la première diode auxiliaire (VD13), telle que l'inversion du sens de circulation du courant test (It) provoque la conduction de la première diode auxiliaire (VD13) et le blocage de la deuxième diode auxiliaire VD14 lors d'un test de la protection différentielle, et réciproquement la conduction de la deuxième diode auxiliaire VD14 et le blocage de la première diode auxiliaire VD13 lors d'un test de la protection contre les surintensités.

7. Déclencheur statique selon la revendication 6, caractérise en ce que le deuxième signal homopolaire est prélevé aux bornes de la deuxième résistance de mesure R2.

8. Déclencheur électronique selon l'une des revendications 5 à 7, caractérisé en ce que le point milieu (E1 à E6) de chaque groupe de paire de diodes en série (VD1, VD2; VD3, VD4; VD5, VD6; VD7, VD8; VD9, VD10; VD11, VD12) est relié respectivement à l'une des extrémités de l'enroulement secondaire des transformateurs de courant (TI1 à TIN), au discriminateur (DDR) de courant différentiel résiduel, et à la deuxième borne test (26), et que l'autre extrémité des enroulements secondaires est reliée à un conducteur commun (22) en liaison avec la première borne test (24).

## Claims

1. A solid-state trip device (16) for a multipole electrical circuit breaker (10) with an operating mechanism (14) of a system of separable contacts (12), comprising :
- a measuring device (20) having a positive output terminal (30) and a negative output terminal (32), equipped with a current sensor per pole comprising a current transformer (TI1, TI2, TI3, TIN) to detect the intensity of the current flowing in each active conductor (R, S, T, N) of the A.C. mains system, each of the active conductors (R, S, T, N) forming the primary winding of a current transformer (TI1, TI2, TI3, TIN),
- first rectifying means formed by diode rectifier bridges (VD1 to VD4, VD5 to VD8) forming a set of rectifier cells (PR1, PR2) and electrically connected with said sensor to deliver a first rectified control signal, proportional to the maximum intensity of the mains system currents (i1, i2, i3, iN),
- a common conductor (22) connected to a terminal of each of the secondary windings of the current transformers (TI1, TI2, TI3, TIN),
- a first electronic processing circuit (34) of said first control signal, comprising at least a delayed or instantaneous tripping circuit designed to send a tripping order to a solid-state switching device (36) with or without a time delay when said signal exceeds a preset threshold,
- an electromagnet with trip coil (18) controlled by said switching device (36) and acting on the operating mechanism (14) after the tripping order has been sent, to open the system of separable contacts (12),
- a test circuit (23) comprising a first auxiliary terminal (24) and a second auxiliary terminal (26) each able to be connected to a fault simulator designed to input an artificial fault current to check operation of the solid-state trip device (16) when the circuit breaker (10) is connected to or disconnected from the active conductors (R, S, T, N),
- and an internal connection circuit (28) performing connection of the auxiliary terminals (24, 26) with the measuring device (20),
characterized in that :
- the internal connection circuit (28) is connected to the input (E5, E6) of a rectifier cell (PR3) belonging to second rectifying means and constituted by two groups of diodes (E, F) forming a diode rectifier bridge (VD9 to VD12), whose output is electrically connected in parallel with the respective outputs of the diode rectifier bridges (VD1 to VD4, VD5 to VD8) constituting the rectifier cells of said first rectifying means,
- the diodes (VD1 to VD12) of the rectifier cells (PR1, PR2, PR3) belonging to the first and second rectifying means are divided into a plurality of identical groups (A to F) electrically connected in parallel between the positive output terminal (30) and the negative output terminal (32), each group (A to F) comprising a pair of serially connected diodes forming a half-bridge (VD1, VD2; VD3, VD4; VD5, VD6; VD7, VD8; VD9, VD10; VD11, VD12), one of the groups (E) of the second rectifying means acting as feedback for all the other groups (A, B, C, D, F),
- the first auxiliary terminal (24) is connected to the common conductor (22), itself connected to the mid-point (E5) of the feedback group (E),
- the second auxiliary terminal (26) is connected to the midpoint (E6) of the other group (F) of the second rectifying means, whereas the mid-points (E1, E2, E3, E4) of the groups (A, B, C, D) of the first rectifying means are connected respectively to the terminals of the secondary windings opposite from those connected to the common conductor (22).

2. The solid-state trip device according to claim 1, for a four-pole circuit breaker protecting a three-phase plus neutral mains system, characterized in that the rectifier cells (PR1, PR2, PR3) associated with the test circuit (23) and with the current transformers (TI1, TI2, TI3, TIN) comprise twelve diodes divided into six groups (A, B, C, D, E, F) of two serially connected diodes.

3. The solid-state trip device according to claim 1, for a three-pole circuit breaker protecting a three-phase mains system without neutral, characterized in that the rectifier cells (PR1 to PR3) associated with the test circuit (23) and with the current transformers (TI1 to TI3) comprise ten diodes divided into five groups (A, B, C, E, F) of two serially connected diodes.

4. The solid-state trip device according to one of the claims 1 to 3, characterized in that the positive output terminal (30) of the measuring device (20) is connected on the one hand to a first measuring resistor (R, R1) having a value which is either fixed or adjustable according to the rating, and on the other hand to the cathode of two diodes (VD10, VD11) whose anode is connected respectively by the connection circuit (28) to the first terminal (24) and the second terminal (26) of the test circuit (23).

5. The solid-state trip device according to one of the claims 1 to 4, applied to a multipole earth leakage circuit breaker (10), having in addition a second electronic processing circuit (40) of a second ground fault signal generated by the measuring device (20) in the presence of an isolation fault causing tripping when the residual earth leakage current exceeds a preset threshold, characterized in that a residual earth leakage current discriminator (DDR) is electrically connected between the first terminal (24) of the test circuit (23) and the input (E5) of a diode rectifier bridge (VD9, VD10, VD12, VD11) of the measuring device (20), the other input (E6) of said bridge being connected to the second terminal (26) of the test circuit (23), and that unidirectional conduction means cooperate with said discriminator (DDR) such that reversing the direction of flow of the test current (It) in the test circuit (23) enables the operation of said first and second electronic processing circuits (34, 40) of the first and second signals relating to overcurrent protection and earth leakage protection of the trip device (16) to be checked separately, testing being performed by means of a simulator having a D.C. or rectified current source in which reversal of the direction of flow of the test current (It) is achieved by simply changing the polarity of the first and second terminals (24, 26) of the test circuit (23).

6. The solid-state trip device according to claim 5, characterized in that the residual earth leakage current discriminator (DDR) comprises a second measuring resistor (R2) having one end connected to said input E5 of the diode rectifier bridge (VD9 to VD12), and an opposite end electrically connected to the first test terminal (24) by means of a first auxiliary diode (VD13), and that a second auxiliary diode (VD14) is reverse connected in the serial circuit formed by the second measuring resistor (R2) and first auxiliary diode (VD13), such that reversing the direction of flow of the test current (It) causes turn-on of the first auxiliary diode (VD13) and turn-off of the second auxiliary diode (VD14) when the earth leakage protection is tested, and reciprocally turn-on of the second auxiliary diode (VD14) and turn-off of the first auxiliary diode (VD13) when the overcurrent protection is tested.

7. The solid-state trip device according to claim 6, characterized in that the second ground fault signal is taken from the terminals of the second measuring resistor (R2).

8. The solid-state trip device according to one of the claims 5 to 7, characterized in that the mid-point (E1 to E6) of each group of pairs of serially connected diodes (VD1, VD2; VD3; VD4; VD5, VD6; VD7, VD8; VD9, VD10; VD11, VD12) is connected respectively to one of the ends of the secondary winding of the current transformers (TI1 to TIN), to the residual earth leakage current discriminator (DDR), and to the second test terminal (26), and that the other end of the secondary windings is connected to a common conductor (22) connected to the first test terminal (24).

## Patentansprüche

1. Elektronischer Auslöser (16) für einen Mehrpol-Leistungsschalter (10) mit einem Schaltmechanismus (14) für ein trennbares Kontaktsystem (12), bestehend aus:
- einer Meßschaltung (20) mit einer positiven Ausgangsklemme (30) und einer negativen Ausgangsklemme (32) sowie pro Pol einem Strommeßsystem mit einem Stromwandler (TI1, TI2, TI3, TIN) zur Überwachung des in jedem aktiven Leiter (R, S, T, N) des Wechselstromnetzes fließenden Stroms, wobei jeder der aktiven Leiter (R, S, T, N) als Primärwicklung eines Stromwandlers (TI1, TI2, TI3, TIM) ausgeführt ist,
- einer ersten Schaltung von Gleichrichtmitteln, in der Diodengleichrichterbrücken (VD1 bis VD4, VD5 bis VD8) zu Gleichrichtereinheiten (PR1, PR2) zusammengeschaltet und zur Bereitstellung eines ersten gleichgerichteten, dem Maximalwert der Netzströme (i1, i2, i3 iN) proportionalen Schaltsignals mit dem genannten Meßwandler elektrisch verbunden sind,
- einem mit einer Klemme jeder Sekundärwicklung der Stromwandler (TI1, TI2, TI3, TIN) verbundenen gemeinsamen Leiter (22),
- einem ersten elektronischen Schaltkreis (34) zur Verarbeitung des genannten ersten Schaltsignals, der zumindest eine verzögerte oder unverzögerte Auslöseschaltung zur verzögerten oder unverzögerten Übertragung des Auslösebefehls an ein elektronisches Schaltorgan (36) bei Überschreiten eines festgelegten Schwellwerts durch das genannte Signal umfaßt,
- einem Elektromagneten mit einer durch das genannte Schaltorgan (36) angesteuerten Auslösespule (18), die nach Empfang des Auslösebefehls auf den Schaltmechanismus (14) wirkt und so das trennbare Kontaktsystem (12) öffnet,
- einem Prüfstromkreis (23), der eine erste Hilfsklemme (24) und eine zweite Hilfsklemme (26) zum Anschluß an einen Fehlersimulator umfaßt, der einen simulierten Fehlerstrom injiziert, um die Funktion des elektronischen Auslösers (16) bei an die aktiven Leiter (R, S, T, N) angeschlossenem bzw. von diesen getrenntem Leistungsschalter zu überprüfen,
- sowie einem internen Verbindungsstromkreis (28) zur Verbindung der Hilfsklemmen (24, 26) mit der Meßschaltung (20),
dadurch gekennzeichnet, daß:
- der interne Verbindungsstromkreis (28) auf den Eingang (E5, E6) einer zu einer zweiten Schaltung von Gleichrichtmitteln gehörenden Gleichrichtereinheit (PR3) geschaltet ist, die aus einer durch zwei Diodengruppen (E, F) gebildeten Gleichrichterbrücke mit den Dioden (VD9 bis VD12) besteht, deren Ausgang zu den entsprechenden Ausgängen der Gleichrichterbrücken mit den Dioden (VD1 bis VD4, VD5 bis VD8) der genannten ersten Gleichrichtmittel parallelgeschaltet ist,
- die Dioden (VD1 bis VD12) der Gleichrichtereinheiten (PR1, PR2, PR3) der ersten bzw. zweiten Gleichrichtmittel in mehrere identische, zwischen der positiven Ausgangsklemme (30) und der negativen Ausgangsklemme (32) parallelgeschaltete Gruppen (A bis F) aufgeteilt sind, wobei jede Gruppe (A bis F) ein in Reihe zu einer Halbbrücke (VD1,VD2; VD3,VD4; VD5,VD6; VD7,VD8; VD9, VD10; VD11,VD12) zusammengeschaltetes Diodenpaar umfaßt und eine der Gruppen (E) der zweiten Gleichrichtmittel sämtlichen anderen Gruppen (A, B, C, D, F) als Rückleitungspfad dient,
- die erste Hilfsklemme (24) mit dem gemeinsamen Leiter (22) verbunden ist, der seinerseits dem gemeinsamen Punkt (E5) der Rückleitungsgruppe (E) verbunden ist,
- die zweite Hilfsklemme (26) mit dem gemeinsamen Punkt (E6) der anderen Gruppe (F) der zweiten Gleichrichtmittel verbunden ist, während die gemeinsamen Punkte (E1, E2, E3, E4) der Gruppen (A, B, C, D) der ersten Gleichrichtmittel jeweils an denjenigen Klemmen der Sekundärwicklungen angeschlossen sind, die den mit dem gemeinsamen Leiter (22) verbundenen Klemmen gegenüberliegen.

2. Elektronischer Auslöser nach Anspruch 1 für einen Vierpol-Leistungsschalter zum Schutz eines Dreiphasen-Netzes mit Neutralleiter, dadurch gekennzeichnet, daß die dem Prüfstromkreis (23) und den Stromwandlern (TI1, TI2, TI3, TIN) zugeordneten Gleichrichtereinheiten (PR1, PR2, PR3) zwölf Dioden umfassen, die in sechs Gruppen (A, B, C, D, E, F) mit je zwei in Reihe geschalteten Dioden aufgeteilt sind.

3. Elektronischer Auslöser nach Anspruch 1 für einen DreipolLeistungsschalter zum Schutz eines Dreiphasen-Netzes ohne Neutralleiter, dadurch gekennzeichnet, daß die dem Prüfstromkreis (23) und den Stromwandlern (TI1 bis TI3) zugeordneten Gleichrichtereinheiten (PR1 bis PR3) zehn Dioden umfassen, die in fünf Gruppen (A, B, C, E, F) mit je zwei in Reihe geschalteten Dioden aufgeteilt sind.

4. Elektronischer Auslöser nach einem der Ansprüche 1 bis 3, dadurch gekennzeichnet, daß die positive Ausgangsklemme (30) der Meßschaltung (20) einerseits mit einem ersten Meßwiderstand (R, R1) mit festem oder in Abhängigkeit vom Nennstrom veränderbarem Wert und andererseits mit den Kathoden zweier Dioden (VD10, VD11) verbunden ist, deren Anoden über den Verbindungsstromkreis (28) an der ersten (24) bzw. zweiten (26) Klemme des Prüfstromkreises (23) liegen.

5. Elektronischer Auslöser nach einem der Ansprüche 1 bis 4 zur Anwendung auf einen Mehrpol-Differenzstromleistungsschalter (10), der zusätzlich über einen zweiten elektronischen Schaltkreis (40) zur Verarbeitung eines zweiten Fehlersignals verfügt, das durch die Meßschaltung (20) bei durch Überschreiten eines festgelegten Schwellwerts durch den Fehlerstrom im Falle eines Isolationsfehlers bedingte Auslösung bereitgestellt wird, dadurch gekennzeichnet, daß ein Differenzstrom-Detektor DDR elektrisch zwischen die erste Klemme (24) des Prüfstromkreises (23) und den Eingang (E5) einer Gleichrichterbrücke mit den Dioden (VD9, VD10, VD12, VD11) der Meßschaltung (20) geschaltet ist, wobei der andere Eingang (E6) der genannten Gleichrichterbrücke mit der zweiten Klemme (26) des Prüfstromkreises (23) verbunden ist, und daß Einwegleitungsmittel mit dem genannten Differenzstrom-Detektor DDR zusammenwirken, so daß durch Stromrichtungsumkehr des Prüfstroms (It) im Prüfstromkreis (23) die Funktion der genannten ersten und zweiten elektronischen Schaltung (34, 40) zur Verarbeitung des ersten Signals für den Überstromschutz bzw. des zweiten Signals für den Differenzstromschutz des Auslösers (16) getrennt überprüft werden kann, wobei die Prüfung mittels eines Simulators vorgenommen wird, der über eine Stromquelle zur Lieferung eines Gleichstroms oder eines gleichgerichteten Strom verfügt, in der die Richtungsumkehr des Prüfstroms (It) durch einfache Polaritätsumkehr der ersten und zweiten Klemme (24, 26) des Prüfstromkreises (23) erfolgt.

6. Elektronischer Auslöser nach Anspruch 5, dadurch gekennzeichnet, daß der Differenzstrom-Detektor (DDR) über einen zweiten Meßwiderstand (R2) verfügt, der einerseits an den genannten Eingang (E5) der Gleichrichterbrücke mit den Dioden (VD9 bis VD12) und andererseits über eine erste Hilfsdiode (VD13) an die erste Prüfklemme (24) angeschlossen ist, und daß eine zweite Hilfsdiode (VD14) gegenpolig mit der Reihenschaltung des zweiten Meßwiderstands (R2) und der ersten Hilfsdiode (VD 13) verbunden so daß bei einer Umkehrung des Prüfstroms (It) zur Prüfüng des Differenzstromschutzes die erste Hilfsdiode (VD13) leitend und die zweite Hilfsdiode (VD14) gesperrt ist und umgekehrt bei Prüfung des Überstromschutzes die zweite Hilfsdiode (VD14) leitend und die erste Hilfsdiode (VD13) gesperrt ist.

7. Elektronischer Auslöser nach Anspruch 6, dadurch gekennzeichnet, daß das zweite Fehlersignal an den Anschlüssen des zweiten Meßwiderstandes (R2) abgegriffen wird.

8. Elektronischer Auslöser nach einem der Ansprüche 5 bis 7, dadurch gekennzeichnet, daß der gemeinsame Punkt (E1 bis E6) jeder der in Reihe geschalteten Diodenpaargruppen (VD1,VD2; VD3,VD4; VD5,VD6; VD7,VD8; VD9,VD10; VD11,VD12) mit einer der Klemmen der Sekundärwicklung der Stromwandler (TI1 bis TIN), mit dem Differenzstrom-Detektor (DDR) und mit der zweiten Prülklemme (26) verbunden sind, und daß die andere Klemme der Sekundärwicklungen mit einem an der ersten Prüfklemme (24) liegenden gemeinsamen Leiter (22) verbunden ist.
